**Europäisches Patentamt**

**European Patent Office**

**Office européen des brevets**

(19)

(11) Veröffentlichungsnummer : **0 301 196 B1**

(12) # EUROPÄISCHE PATENTSCHRIFT

(45) Veröffentlichungstag der Patentschrift :
06.03.91 Patentblatt 91/10

(51) Int. Cl.$^5$ : **F24F 13/02, B60H 1/00**

(21) Anmeldenummer : **88108509.6**

(22) Anmeldetag : **27.05.88**

(54) **Belüftungsrohrstück für Luftverteilungsleitungen, insbesondere in Wohnwagen od.dgl.**

(30) Priorität : **29.07.87 DE 3725109**

(43) Veröffentlichungstag der Anmeldung :
**01.02.89 Patentblatt 89/05**

(45) Bekanntmachung des Hinweises auf die
Patenterteilung :
**06.03.91 Patentblatt 91/10**

(84) Benannte Vertragsstaaten :
**FR GB IT**

(56) Entgegenhaltungen :
**DE-U- 7 705 526**
**FR-A- 837 506**

(73) Patentinhaber : **Philipp Kreis GmbH & Co.**
**TRUMA-Gerätebau**
**Wernher-von-Braun-Strasse 12-14**
**W-8011 Putzbrunn (DE)**

(72) Erfinder : **Mossbach, Wilhelm**
**Rotbuchenstrasse 37**
**W-8011 Kirchseeon (DE)**

(74) Vertreter : **Hain, Leonhard, Dipl.-Ing.**
**Tal 18/IV**
**W-8000 München 2 (DE)**

EP 0 301 196 B1

Jouve, 18, rue Saint-Denis, 75001 PARIS

**Beschreibung**

Belüftungsrohrstück für Luftverteilungsleitungen, insbesondere in Wohnwagen od. dgl.

Die Erfindung betrifft ein Belüftungsrohrstück für Luftverteilungsleitungen, insbesondere in fahrbaren Räumen, wie Wohnwagen, Fahrzeugkabinen od. dgl., gemäß dem Oberbegriff des Patentanspruches 1.

An einem bekannten Belüftungsrohr für derartige Luftverteilungsleitungen (DE-Gm 77 05 526) sind zum Ausblasen der Luft in einen zu belüftenden Raum in der Rohrwand Austrittsöffnungen ausgebildet, die etwa in der Rohrquerschnittsebene angeordnet und innen von einer Muldentasche begrenzt sind. Diese als Leitflächen für die ausströmende Luft dienenden Muldentaschen sind durch Eindrücken der Rohrwand geformt und bilden schaufelförmige, in den Rohrhohlraum hineinstehende Fänger, die vom Luftstrom Teilströme abtrennen und nach außen umlenken. Mehrere solcher Muldentaschen sind in der Regel längs einer Mantellinie eines Rohrabschnittes angeordnet. Da diese Muldentaschen mit Vorteil nur in einer verformbaren Wand geschaffen werden können, sind sie in der Praxis auf flexible Rohre, wie Metallschläuche od. dgl., beschränkt. Aus solchen Muldentaschen treten außerdem verhältnismäßig breite Luftströme aus, die keine in den Raum hineinwirkende Strahlenbildung zulassen. Bei einem anderen Belüftungsrohr (FR-A-837 506) sind längliche Austrittsschlitze in der Rohrwand vorgesehen, denen im Innern des Rohres mit im Umriß mit der Schlitzöffnung übereinstimmende Fangtaschen zugeordnet sind. Ein ebener unter einem Anstellwinkel zur Rohrwand verlaufender Fangtaschenboden endet am Schlitzende. Da die von dieser Fangtasche gebildete Auffangöffnung flächenmäßig merklich kleiner als die Schlitzöffnung ist, wird der vom Hauptluftstrom durch diese Fangtasche abgezweigte Luftstrom mit verminderter Geschwindigkeit und Druck in den Raum austreten, weshalb dieser Luftstrom auch in seiner Streuwirkung nicht den Anforderungen entspricht. Weiterhin ist festzustellen, daß die spitz im Austrittsschlitz endende Fangtasche die Luftströmung kaum umlenkt und diese im wesentlichen die durch die Fangbodenneigung vorgebene Strömungsrichtung beibehält. Ein zum Belüftungsrohr schräggerichteter Luftstrom ist aber auch dadurch in seiner Tiefenwirkung in den Raum hinein geschwächt.

Der Erfindung liegt daher die Aufgabe zugrunde, ein Belüftungsrohrstück zu schaffen, aus dem die Luft in einem weitgehend gleichmäßigen, verstärkten Strahl in Streifenform austritt und das besonders einfach an jeder gewünschten Stelle in eine Luftverteilungsleitung eingebaut werden kann.

Diese Aufgabe wird mit einem Belüftungsrohrstück gemäß dem Oberbegriff des Patentanspruches 1 erfindungsgemäß durch die Kennzeichnungsmerkmale des Patentanspruches gelöst.

Vorteilhafte Weiterentwicklungen der Erfindung sind in den Unteransprüchen genannt.

In einem Rohrstück mit nur einem Austrittsschlitz läßt sich eine nach strömungstechnischen Gesichtspunkten ausgebildete Fangtasche einfach und zweckmäßig formen. Der längliche Austrittsschlitz geringer Breite läßt einen streifenförmigen Luftstrahl, der weit in den Raum hinein wirkt, entstehen. Da die Rohrstücke an beiden Enden mit Anschlußorganen versehen sind, können die Rohrstücke zu einem Belüftungsrohr beliebiger Länge und mit vielen aneinandergereihten Austrittsschlitzen zusammengesteckt werden. Sind diese Austrittsschlitze zueinander ausgerichtet, dann bilden die Luftstrahlen zusammen einen sogenannten Luftteppich. Zur exakten Ausrichtung der Austrittsschlitze an einem montierten Belüftungsrohr dienen die an jedem Rohrstück vorhandenen Anschlagringe mit ihren Anschlagkanten, durch die ein Rohr beliebiger Länge aus einer entsprechenden Anzahl von Rohrstücken zudem einen sicheren Halt bzw. Anschlag an einer Befestigungswand findet. Das erfindungsgemäß ausgebildete Rohrstück ist mit seinem gerichteten Luftstrahl besonders zum Belüften sonst schwer zugänglicher Wandecken in Aufenthaltsräumen oder Schlafkojen geeignet.

Ein Ausführungsbeispiel der Erfindung ist in der Zeichnung dargestellt und wird im folgenden näher beschrieben. Es zeigen :

Fig. 1 einen Längsschnitt durch ein Belüftungsrohrstück,

Fig. 2 eine Draufsicht hierzu und

Fig. 3 ein Rohrstück in Einbaustellung.

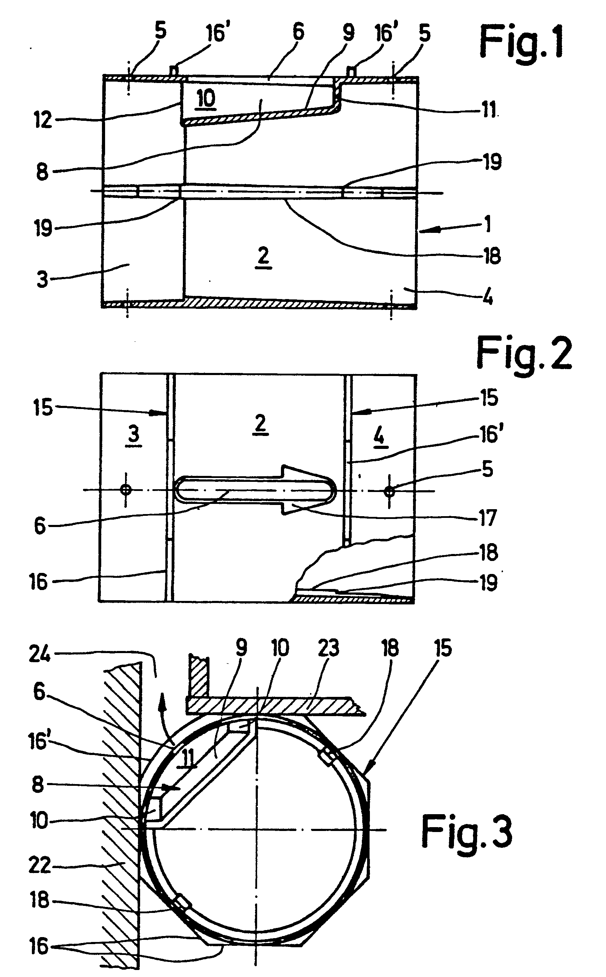

Ein Belüftungsrohrstück 1 umfaßt einen Hauptabschnitt der Rohrwand 2 und die beiden zum Zusammenstecken der Rohrstücke 1 ausgebildeten Steckstutzen 3, 4. Fixierlöcher 5 können zusätzlich zum Verbinden ineinandergesteckter Rohrstücke 1 dienen. Im Hauptabschnitt oder auf dessen gesamte Länge erstreckt sich ein Austrittsschlitz 6, der gegenüber seiner Länge verhältnismäßig schmal ist. Um diesem Austrittsschlitz 6 aus dem Inneren des Rohrstückes 1 Strömungsluft zuzuführen, ist ihm eine Fangtasche 8 zugeordnet, die, wie insbesondere aus Fig. 3 ersichtlich ist, aus einem leicht ansteigenden Taschenboden 9, den Seitenwänden 10 sowie einer am Ende des Austrittsschlitzes 6 abschließenden Prallwand 11 besteht. Die Fangtasche 8 ist zweckmäßig etwas länger als der Austrittsschlitz 6, so daß das offene Fangtaschenende 12 über den Austrittsschlitz hinaussteht und der zuströmende Luftstrom bereits vor dem Beginn des Austrittsschlitzes 6 vom Hauptstrom abgetrennt wird. Der Taschenboden 9 steigt zweckmäßig mit einem Neigungswinkel von 2° bis 15° zur Prallwand 11 hin an, die annähernd senkrecht an das Ende des Austrittsschlitzes 6 anschließt.

Wie die Fig. 2 und 3 zeigen, trägt das Belüftungsrohrstück 1 außen zwei Anschlagringe 15, die in beispielsweise acht gleich lange Anschlagkanten 16 aufgeteilt sind. Durch diese Anschlagkanten 16 erhält jedes Rohrstück 1 einen planenund damit sicheren Sitz an einer Befestigungswand 22,23. Da die Anschlagringe 15 in ihrer Unterteilung und Anordnung übereinstimmen, bieten sie auch die Möglichkeit einer genauen Ausrichtung der zu einem längeren Belüftungsrohr zusammengesteckten Rohrstücke 1, so daß auf diese Weise ein langer Luftteppich aus den aneinandergereihten einzelnen Luftstrahlen geschaffen werden kann. Andererseits können die Austrittsschlitze 6 aber auch gegeneinander gedreht sein und so in verschiedene Richtungen ausblasen. Zum Ausrichten der Rohrstücke 1 kann bereits ein Anschlagring 15 an jedem Rohrstück 1 ausreichen. Weil die Rohrstücke 1 verhältnismäßig kurz sind, ergänzen sich die Anschlagringe 15 der benachbarten Rohrstücke 1. Eine in die Rohraußenwand eingeprägte Pfeilmarkierung 17 gibt die Strömungsrichtung an. In Fig. 3 ist ein Rohrstück 1 bzw. eine zusammengesetzte Rohrleitung so in einen Wohnwagenaufbau zwischen einer Außenwand 22 und einer dazu senkrecht angeordneten Innenwand 23 eingebaut, daß der aus dem Austrittsschlitz 6 austretende Luftstrahl oder -Teppich in einen Wandspalt 24 hineinbläst. Durch die radiale Höhe der Anschlagringe 15 läßt sich auch der Abstand der Rohrstücke 1 von der Befestigungswand 22,23 bestimmen. Um zu vermeiden, daß beim Einbau ein Rohrstück 1 mit seinem Austrittsschlitz 6 gegen eine Wand gerichtet und dadurch der Luftaustritt beeinträchtigt wird, ist diese Anschlagkante 16' zweckmäßig nach außen gewölbt. Diese Wölbung verhindert einen satten, wackelfreien Anschlag und dadurch eine Montage des Rohrstutzens in dieser Stellung.

Damit beim Zusammenstecken der Rohrstücke 1 die Steckstutzen 3,4 nicht zu weit in das Rohr hineingeschoben werden und die Fangtasche 8 berühren, sind gegenüberliegende und zur Fangtasche 8 versetzte Längsrippen 18 mit Steckanschlägen 19 ausgebildet. Diese Längsrippen 18 versteifen zudem das Rohrstück 1.

## Ansprüche

1. Belüftungsrohrstück (1) für Luftverteilungsleitungen, insbesondere in fahrbaren Räumen, wie Wohnwagen, Fahrzeugkabinen od. dgl., mit länglichen Austrittsschlitzen (6) und in den Rohrhohlraum hineinragenden Fangtaschen (8) aus den Austrittsschlitz begrenzenden Seitenwänden und einem schräg zum Austrittsschlitz ansteigenden Fangtaschenboden zum Abtrennen eines in den zu belüftenden Raum ausblasenden Teilluftstromes vom durch die Luftverteilungsleitung strömenden Hauptluftstrom, dadurch gekennzeichnet, daß die dem einzigen Austrittsschlitz (6) des Rohrstückes zugeordnete Fangtasche (8) eine stirnseitige annähernd senkrecht an die Rohrwand (2) anschließende Prallwand (11) sowie von den Austrittsschlitz-Seitenkanten mit Abstand abgesetzte Seitenwände (10) aufweist und die Enden des Rohrstückes als Steckstutzen (3, 4) ausgebildet sind.

2. Belüftungsrohrstück nach Anspruch 1, dadurch gekennzeichnet, daß die Fangtasche (8) mit ihrem offenen Fangende (12) über den Austrittsschlitz (6) hinaussteht.

3. Belüftungsrohrstück nach Anspruch 1 oder 2, dadurch gekennzeichnet, daß es auf seiner Länge mindestens einen radial nach außen abstehenden Anschlagring (15) mit einer Vielzahl von geraden, die Kreisform aufteilenden Anschlagkanten (16) trägt.

4. Belüftungsrohrstück nach Anspruch 3, dadurch gekennzeichnet, daß eine der Anschlagkanten (16) symmetrisch zum Austrittsschlitz (6) angeordnet ist.

5. Belüftungsrohrstück nach Anspruch 3 oder 4, dadurch gekennzeichnet, daß in einem Abstand von jedem Austrittsschlitzende ein Anschlagring (15) vorgesehen ist.

6. Belüftungsrohrstück nach einem der Ansprüche 3 bis 5, dadurch gekennzeichnet, daß die am Austrittsschlitz (6) ausgebildete Anschlagkante (16') nach außen gewölbt ist.

7. Belüftungsrohrstück nach einem der Ansprüche 1 bis 6, dadurch gekennzeichnet, daß im Innern des Rohrstückes (1) an Längsrippen (18) nahe den Fangtaschenenden Steckanschläge (19) ausgebildet sind.

## Claims

1. Ventilating-pipe section (1) for air-distribution ducts, in particular in mobile enclosures, such as caravans, vehicle cabins or the like, having elongate outlet slots (6) and collecting pockets (8) extending into the hollow area of the duct, with lateral walls which define the outlet slot, and with a collecting-pocket bottom, which rises transversely relative to the outlet slot, for the separation of part of an airstream, which flows into the area to be ventilated, from the main airstream flowing through the air-distribution duct, **characterised in that** the collecting pocket (8), which is associated with the only outlet slot (6) of the pipe section, has a baffle wall (11), the front of which joins the pipe wall (2) substantially perpendicularly and has lateral walls (10), which are offset a distance from the lateral edges of the outlet slot, and the ends of the pipe section are formed as push-on sockets (3, 4).

2. Ventilating-pipe section according to claim 1, **characterised in that** the collecting pocket (8) extends beyond the outlet slot (6) with its open collecting end (.12).

3. Ventilating-pipe section according to claim 1 or 2, **characterised in that** it has along its length at least one radially outwardly protruding abutment ring (15) with a plurality of straight abutment edges (16), which break up the circular shape.

4. Ventilating-pipe section according to claim 3, **characterised in that** one of the abutment edges (16) is arranged symmetrically relative to the outlet slot (6).

5. Ventilating-pipe section according to claim 3 or 4, **characterised in that** an abutment ring (15) is provided at a distance from the end of each outlet slot.

6. Ventilating-pipe section according to one of the claims 3 to 5, **characterised in that** outwardly curved abutment edge (16') is formed at the outlet slot (6).

7. Ventilating-pipe section according to one of the claims 1 to 6, **characterised in that** plug stops (19) are arranged inside the pipe section (1) on longitudinal ribs (18) near the ends of the collecting pockets.

## Revendications

1. Élément (1) de tube de ventilation pour gaines de distribution d'air en particulier dans des locaux mobiles tels que des caravanes, des cabines de véhicules ou similaires, avec des fentes (6) de sortie allongées et des poches (8) en piège qui font saillie à l'intérieur de la cavité du tube et sont composées de parois latérales délimitant la fente de sortie et d'un fond de poche en piège qui remonte en biais vers la fente de sortie pour séparer, du courant d'air principal s'écoulant à travers la gaine de distribution d'air, un filet d'air partiel qui est ressoufflé dans le local devant être ventilé, caractérisé par le fait que la poche (8) formant piège, affectée à la fente unique de sortie (6) de l'élément de tube, présente une plaque (11) en chicane se raccordant sur le côté frontal sensiblement perpendiculairement à la paroi (2) du tube, ainsi que des parois latérales (10) éloignées à distance des bords latéraux de la fente de sortie, et que les extrémités de l'élément de tube sont réalisées sous la forme d'embouts (3, 4) à emmancher.

2. Élément de tube de ventilation suivant la revendication 1, caractérisé par le fait que la poche (8) formant piège dépasse, avec son extrémité (12) ouverte de captage, au-delà de la fente de sortie (6).

3. Élément de tube de ventilation suivant la revendication 1 ou 2, caractérisé par le fait que l'élément porte sur sa longueur au moins une bague de butée (15) faisant saillie dans le sens radial vers l'extérieur, avec une multitude de rebords de butée (16) droits qui divisent la forme circulaire.

4. Élément de tube de ventilation suivant la revendication 3, caractérisé par le fait que l'un des rebords de butée (16) est placé symétriquement par rapport à la fente (6) de sortie.

5. Élément de tube de ventilation suivant la revendication 3 ou 4, caractérisé par le fait qu'une bague de butée (15) est prévue à une certaine distance par rapport à chaque extrémité de fente de sortie.

6. Élément de tube de ventilation suivant l'une des revendications 3 à 5, caractérisé par le fait que le rebord de butée (16') réalisé à la fente de sortie (6) est cintré vers l'extérieur.

7. Élément de tube de ventilation suivant l'une des revendications 1 à 6, caractérisé par le fait que des butées (19) d'emmanchement sont réalisées à l'intérieur de l'élément (1) de tube sur les nervures (18) longitudinales proche des extrémités des poches formant piège.

Fig.1

Fig.2

Fig.3